# EUROPÄISCHE PATENTANMELDUNG

(11) **EP 1 946 970 A2**
(43) Veröffentlichungstag der Anmeldung: **23.07.2008**
(21) Anmeldenummer: 08000569.7
(22) Anmeldetag: 14.01.2008
(51) Int. Cl.: B60R 5/04

(54) **Kofferraum für einen Personenkraftwagen**

(30) Priorität: 16.01.2007 DE 102007002310
(71) Anmelder: Bayerische Motoren Werke Aktiengesellschaft, 80809 München (DE)
(72) Erfinder: Wokrinek, Michael, 84079 Bruckberg (DE); Stöckl, Siegfried, 84076 Pfeffenhausen (DE)

(57) **Zusammenfassung**

Kofferraum für einen Personenkraftwagen bei dem eine Vorrichtung zur Abtrennung des Kofferraums in einen verdeckten Bereich und in einen offenen Bereich bei einem ausgezogenen, flexiblen Flächengebilde vorgesehen ist. Aufgabe der Erfindung ist es, einen Kofferraum für einen Personenkraftwagen zu schaffen, bei dem die Abtrennung des Kofferraums in unterschiedlich große Kofferraumabteile möglich ist.

Dies wird dadurch erreicht, dass das flexible Flächengebilde (17) in der Gebrauchsstellung (18) über die am freien Ende des flexiblen Flächengebildes (17) vorgesehene Halterungsvorrichtung (19,21,22) an einem hinteren Ende des Kofferraums (2) über mindestens eine Halterung (28) befestigbar ist.

## Beschreibung

Die Erfindung betrifft einen Kofferraum für einen Personenkraftwagen gemäß dem Oberbegriff des Anspruchs 1.

Aus der DE 100 63 728 ist bereits ein Kofferraum für einen Personenkraftwagen bekannt, bei dem unterhalb einer Hutablage hinter einer Rückenlehne einer Rücksitzbank eine Vorrichtung zur Abtrennung eines Abteils eines Kofferraums angeordnet ist.

Die Vorrichtung weist ein flexibles Flächengebilde, wie beispielsweise ein Trennnetz, auf, das auf einer in einem Gehäuse der Vorrichtung drehbar gelagerten Welle aufgewickelt ist. Das flexible Flächengebilde befindet sich im aufgewickelten Zustand in einer Nichtgebrauchsstellung. In einer Gebrauchsstellung ist das flexible Flächengebilde aus dem Gehäuse herausgezogen und in Halterungen, die an einem Kofferraumboden oder seitlich in Seitenwänden in der Nähe des Kofferraumbodens ausgebildet sind, arretiert.

Dadurch ergibt sich zwischen der Rückwand der Rückenlehne und dem textilen Flächengebilde ein abgetrenntes und nicht einsehbares Kofferraumabteil. Das flexible Flächengebilde erstreckt sich über die gesamte Kofferraumbreite und ist im Wesentlichen vertikal ausgerichtet.

Aufgabe der Erfindung ist es, einen Kofferraum für einen Personenkraftwagen zu schaffen, bei dem die Abtrennung des Kofferraums in unterschiedlich große Kofferraumabteile möglich ist.

Diese Aufgabe wird durch die Merkmale des Anspruchs 1 gelöst.

Bei einem erfindungsgemäßen Kofferraum für einen Personenkraftwagen ist eine Vorrichtung zum Abtrennen des Kofferraums in ein verdecktes Kofferraumabteil und in ein offenes Kofferraumabteil vorgesehen. Die Vorrichtung weist ein flexibles Flächengebilde auf, das in einer Nichtgebrauchsstellung in einem Gehäuse der Vorrichtung auf einer im Gehäuse drehbar gelagerten Welle aufgewickelt ist. In einer Gebrauchsstellung ist das flexible Flächengebilde über mindestens eine Halterungsvorrichtung, die an einem außerhalb des Gehäuses befindlichen Ende des flexiblen Flächengebildes angeordnet ist, lösbar an im Kofferraum vorgesehenen Halterungen arretierbar.

Das flexible Flächengebilde ist in der Gebrauchsstellung über die am äußeren Ende des flexiblen Flächengebildes vorgesehene Halterungsvorrichtung am hinteren Ende des Kofferraums oder am Kofferraumboden befestigbar, wobei das flexible Flächengebilde in der Gebrauchsstellung in einer in Fahrzeugquerrichtung y gesehenen Seitenansicht eine konkave Form oder eine geradlinige Form aufweist. Der Aufbau des erfindungsgemäßen Kofferraums für einen Personenkraftwagen ermöglicht sowohl eine Abtrennung des Kofferraums als auch eine variable Nutzung des Kofferraums.

Die Unteransprüche betreffen vorteilhafte Ausgestaltungen der Erfindung.

In einer vorteilhaften Ausführungsform weist der Kofferraum einen Kofferraumboden, eine den Kofferraumboden umgebende und in Fahrzeughochrichtung z sich erstreckende Wandung und eine obere Kofferraumwand, die aus einer Hutablage und aus einem Kofferraumdeckel gebildet ist, auf.

Vorteilhafterweise ist die Vorrichtung zur Abtrennung des Kofferraumes an einer Unterseite der Hutablage angeordnet.

Mindestens eine Halterung zur Befestigung der am flexiblen Flächengebilde vorgesehenen Halterungsvorrichtung ist vorteilhafterweise an der hinteren Karosseriewand des Kofferraums angeordnet.

In einer vorteilhaften Ausführungsform ist die jeweilige Halterung zur Befestigung des flexiblen Flächengebildes beabstandet zum Kofferraumboden vorgesehen.

Mindestens eine Halterung zur Befestigung der am flexiblen Flächengebilde vorgesehenen Halterungsvorrichtung ist alternativ oder zusätzlich am Kofferraumboden in vorgegebenen Abständen vorgesehen, so dass die Größe des verdeckten Kofferraumabteils und des offenen Kofferraumabteils zusätzlich in der Fahrzeuglängsrichtung x einstellbar ist.

Die am flexiblen Flächengebilde vorgesehene Halterungsvorrichtung ist vorteilhafterweise eine Stange, die am freien Ende des flexiblen Flächengebildes angeordnet ist. Die Stange steht mit ihren gegenüberliegenden Enden mit einer vorbestimmten Länge über die seitlichen Ränder des flexiblen Flächengebildes über.

Die überstehenden Enden der Stange sind in einer vorteilhaften Ausführungsform Einhängezapfen, die in der Gebrauchsstellung in den Halterungen lösbar befestigt sind.

Die Halterung ist vorteilhafterweise jeweils eine Vertiefung oder eine Aussparung oder eine Öffnung oder eine Schlaufe oder eine Öse.

In einer vorteilhaften Ausführungsform sind an der hinteren Karosseriewand in unterschiedlichen Höhen mindestens zwei Halterungen zur Befestigung der Vorrichtung vorgesehen, so dass die Größe des verdeckten Kofferraumabteils und des offenen Kofferraumabteils zusätzlich in der Fahrzeughochrichtung z einstellbar ist.

Das flexible Flächengebilde weist vorteilhafterweise Verstärkungen in Form von Stangen oder dergleichen auf.

Die die Verstärkungen erstrecken sich mindestens in Fahrzeugquerrichtung y und erhöhen die Belastbarkeit des flexiblen Flächengebildes.

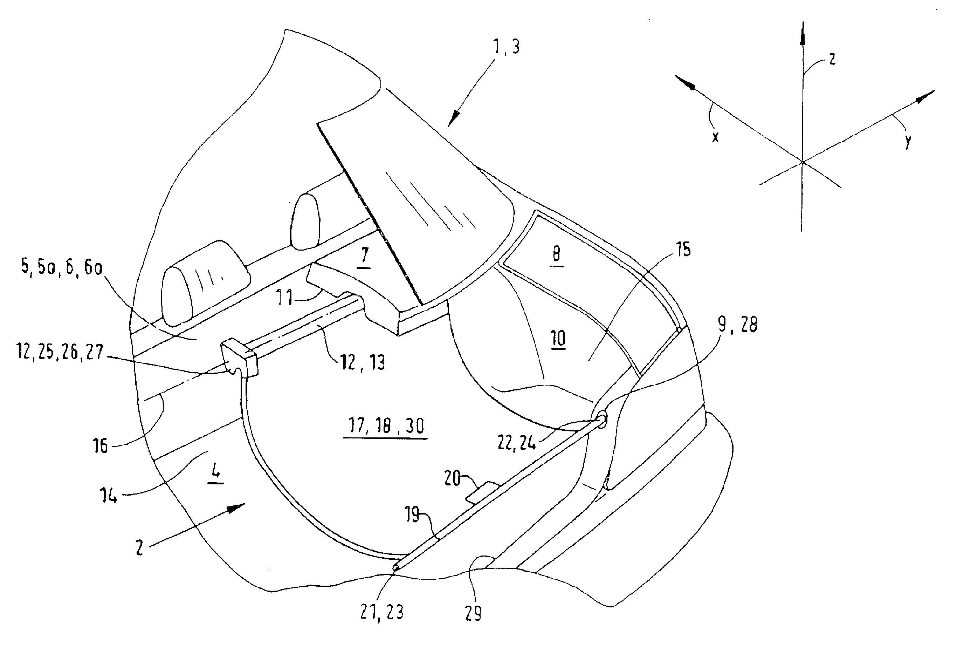

Eine Ausführungsform der Erfindung wird nachstehend anhand einer einzigen Figur beispielshalber beschrieben, die eine teilweise geschnittene und perspektivische Darstellung eines teilweise dargestellten Kofferraumes 2 eines Personenkraftwagens 1 mit einem Stufenheck 3 zeigt.

Der Kofferraum 2 weist einen Boden 4 auf, der in Fahrzeuglängsrichtung x in Richtung eines Fahrzeug-Innenraumes von einer Rückwand 5 einer Rückenlehne 6a einer Rücksitzbank 6 begrenzt ist. An ein oberes Ende 5a der Rückwand 5 der Rückenlehne 6 schließt sich in Fahrzeuglängsrichtung x in Richtung einer hinteren Karosseriewand 9 eine Hutablage 7 an. In gleicher Richtung folgt auf die Hutablage 7 ein teilweise dargestellter Kofferraumdeckel 8. Der Kofferraumdeckel 8 ist von der hinteren Karosseriewand 9 und von seitlichen Karosseriewänden 10 umgeben, die sich in Fahrzeughochrichtung z erstrecken.

An einer Unterseite 11 der Hutablage 7 ist ein Gehäuse 12 einer Vorrichtung 13 zur Abtrennung des Kofferraums 2 in zwei Kofferraumabteile 14 und 15 befestigt. Die Vorrichtung 13 weist, wie dies in der DE 100 63 728 A1 näher beschrieben ist, eine Rollowelle auf, die um eine Drehachse 16 drehbeweglich in dem Gehäuse 12 gelagert ist.

Die Rollowelle ist durch eine Rückholfeder in einer Drehrichtung in einer solchen Weise beaufschlagt, dass ein flexibles Flächengebilde 17 aus der in der Figur gezeigten Gebrauchsstellung 18, in der sich das flexible Flächengebilde 17 in einem abgewickelten Zustand befindet, in eine Nichtgebrauchsstellung über die Rückholfeder zurückgeholt wird. In der Nichtgebrauchsstellung ist das flexible Flächengebilde 17 bis auf eine Auszugleiste oder Auszugstange 19, die als Anschlag dient, vollständig im Gehäuse 17 aufgewickelt. Das flexible Flächengebilde 17 ist beispielsweise ein Trennnetz oder eine Plane.

An der Auszugstange 19 ist ein Griff oder ein überstehendes Teil 20 ausgebildet, um das flexible Flächengebilde 17 im aufgewickelten Zustand aus dem Gehäuse 12 leichter herausziehen zu können. An den gegenüberliegenden Enden 21, 22 der Auszugstange 19 sind Einhängezapfen 23, 24 vorgesehen.

In der gezeigten Ausführungsform sind an den gegenüberliegenden Enden 25 des Gehäuses 12 jeweils eine Halterung 26 mit einer Vertiefung 27 vorgesehen. In den Halterungen 26 sind die Einhängezapfen 23, 24 gehaltert, so dass das flexible Flächengebilde nicht in den Innenraum des Gehäuses 12 gezogen wird. Zur Halterung der Einhängezapfen 23, 24 in der Gebrauchsstellung 18 sind Halterungen 28 vorgesehen. Die Halterungen 28 sind, wie dies in der in der Figur gezeigten Ausführungsform dargestellt ist, in der hinteren Karosseriewand 9 ausgebildet.

In einer Ausführungsform sind an der hinteren Karosseriewand 9 in unterschiedlichen Höhen mindestens zwei Halterungen 28 zur Befestigung der Einhängezapfen 23, 24 vorgesehen, so dass die Größe des verdeckten Kofferraumabteils 14 und des offenen Kofferraumabteils 15 zusätzlich in der Fahrzeughochrichtung z einstellbar ist. In dem verdeckten Kofferraumabteil 14 kann bei dieser Ausführungsform der Boden 4 des Kofferraums 2 vollständig genutzt werden.

Mindestens eine Halterung 28 zur Befestigung der am flexiblen Flächengebilde vorgesehenen Halterungsvorrichtung, beispielsweise in Form der Einhängezapfen 23, 24, ist alternativ oder zusätzlich am Kofferraumboden 4 in vorgegebenen Abständen vorgesehen. Dadurch ist die Größe des verdeckten Kofferraumabteils 14 und des offenen Kofferraumabteils 15 zusätzlich in der Fahrzeuglängsrichtung x einstellbar.

Die Halterungen 28 können beispielsweise Vertiefungen oder Schlaufen oder Ösen sein, in die die Einhängezapfen 23, 24 eingehängt, eingesteckt und/oder eingeklammert sind.

In der Gebrauchsstellung 18 des flexiblen Flächengebildes 17 hängt das flexible Flächengebilde 17 zwischen der Anordnung der Vorrichtung 13 an der Hutablage 7 und der hinteren Karosseriewand 9. Dadurch wird der Kofferraum 2 in das verdeckte Kofferraumabteil 14 und das offene Kofferraumabteil 15 eingeteilt. Auf einer Außenfläche 30 des flexiblen Flächengebildes 17 kann leichteres Ladegut, wie beispielsweise Kleidung abgelegt werden.

## Patentansprüche

1. Kofferraum für einen Personenkraftwagen, mit einer Vorrichtung zum Abtrennen des Kofferraums (2) in ein verdecktes Kofferraumabteil (14) und in ein offenes Kofferraumabteil (15), wobei die Vorrichtung (13) ein flexibles Flächengebilde (17) aufweist, das in einer Nichtgebrauchsstellung in einem Gehäuse (12) der Vorrichtung (13) auf einer im Gehäuse drehbar gelagerten Welle aufgewickelt ist, wobei das flexible Flächengebilde (17) in einer Gebrauchsstellung (18) über mindestens eine Halterungsvorrichtung (19, 23, 24), die an einem außerhalb des Gehäuses (12) befindlichen, freien Ende des flexiblen Flächengebildes (17) angeordnet ist, lösbar an im Kofferraum (2) vorgesehenen Halterungen (28) arretierbar ist, **dadurch gekennzeichnet, dass** das flexible Flächengebilde (17) in der Gebrauchsstellung (18) über die am freien Ende des flexiblen Flächengebildes (17) vorgesehene Halterungsvorrichtung (19, 21, 22) an einem hinteren Ende des Kofferraums (2) über mindestens eine Halterung (28) befestigbar ist.

2. Kofferraum nach Anspruch 1,
**dadurch gekennzeichnet, dass** das flexible Flächengebilde (17) in der Gebrauchsstellung (18) über die am freien Ende des flexiblen Flächengebildes (17) vorgesehene Halterungsvorrichtung (19, 21, 22) alternativ am Kofferraumboden (4) über mindestens eine Halterung (28) befestigbar ist.

3. Kofferraum nach den Ansprüchen 1 oder 2,
**dadurch gekennzeichnet, dass** das flexible Flächengebilde (17) in der Gebrauchsstellung (18) in einer in Fahrzeugquerrichtung y gesehenen Seitenansicht eine konkave Form oder eine geradlinige Form aufweist.

4. Kofferraum nach einem der vorhergehenden Ansprüche,
**dadurch gekennzeichnet, dass** der Kofferraum (2) durch den Kofferraumboden (4), einer den Kofferraumboden umgebenden und in Fahrzeughochrichtung z sich erstreckenden Wandung (5, 9, 10) und aus einer oberen Kofferraumwand, die aus einer Hutablage (7) und aus einem Kofferraumdeckel (8) besteht, gebildet ist.

5. Kofferraum nach einem der vorhergehenden Ansprüche,
**dadurch gekennzeichnet, dass** die Vorrichtung (13) zur Abtrennung des Kofferraumes (2) an einer Unterseite (11) der Hutablage (7) angeordnet ist,

6. Kofferraum nach einem der vorhergehenden Ansprüche,
**dadurch gekennzeichnet, dass** die Halterungen (28) zur Befestigung des flexiblen Flächengebildes (17) an der hinteren Karosseriewand (9) des Kofferraums (2) angeordnet sind.

7. Kofferraum nach Anspruch 6,
**dadurch gekennzeichnet, dass** die Halterungen (28) beabstandet zum Kofferraumboden (4) vorgesehen sind.

8. Kofferraum nach einem der vorhergehenden Ansprüche,
**dadurch gekennzeichnet, dass** an der hinteren Karosseriewand (9) in unterschiedlichen Höhen mindestens zwei Halterungen (28) zur Befestigung der Vorrichtung (13) vorgesehen sind, so dass die Größe des verdeckten Kofferraumabteils (14) und des offenen Kofferraumabteils (15) in Fahrzeughochrichtung z einstellbar ist.

9. Kofferraum nach einem der vorhergehenden Ansprüche,
**dadurch gekennzeichnet, dass** mindestens eine Halterung (28) zur Befestigung der am flexiblen Flächengebilde (17) vorgesehenen Halterungsvorrichtung (19, 21, 22) zusätzlich oder alternativ am Kofferraumboden (4) in vorgegebenen Abständen vorgesehen ist, so dass die Größe des verdeckten Kofferraumabteils (14) und des offenen Kofferraumabteils (15) zusätzlich in Fahrzeuglängsrichtung x einstellbar ist.

10. Kofferraum nach einem der vorhergehenden Ansprüche,
**dadurch gekennzeichnet, dass** die am flexiblen Flächengebilde (17) vorgesehene Halterungsvorrichtung (19, 21, 22) eine Stange ist, die am freien Ende des flexiblen Flächengebildes (17) angeordnet ist und dass die Stange (19) mit ihren gegenüberliegenden Enden (21, 22) mit einer vorbestimmten Länge über die seitlichen Ränder des flexiblen Flächengebildes (17) übersteht.

11. Kofferraum nach Anspruch 10,
**dadurch gekennzeichnet, dass** die überstehenden Enden (21, 22) der Stange (19) Einhängezapfen (23, 24) sind, die in der Gebrauchsstellung (18) in den Halterungen (28) lösbar befestigt sind.

12. Kofferraum nach einem der vorhergehenden Ansprüche,
**dadurch gekennzeichnet, dass** die Halterung (28) jeweils eine Vertiefung oder eine Aussparung oder eine Öffnung oder eine Schlaufe oder eine Öse ist.

13. Kofferraum nach einem der vorhergehenden Ansprüche,
**dadurch gekennzeichnet, dass** das flexible Flächengebilde (19) Verstärkungen in Form von Stangen oder dergleichen aufweist.

14. Kofferraum nach Anspruch 13,
**dadurch gekennzeichnet, dass** sich die Verstärkungen mindestens in Fahrzeugquerrichtung y erstrecken und die Belastbarkeit des flexiblen Flächengebildes erhöhen.
